# FASCICULE DE BREVET EUROPEEN

(11) **EP 0 979 057 B1**
(45) Date de publication et mention de la délivrance du brevet: **03.12.2003**
(21) Numéro de dépôt: 98913814.4
(22) Date de dépôt: 03.03.1998
(51) Int. Cl.: A61C 8/00

(54) **SYSTEME POUR PREPARER LA POSE D'UN IMPLANT DENTAIRE**
SYSTEM ZUM VORBEREITEN DES EINSETZENS EINES ZAHNIMPLANTATS
SYSTEM OF PREPARING FOR THE PLACEMENT OF A DENTAL IMPLANT

(30) Priorité: 07.03.1997 FR 9702950
(43) Date de publication de la demande: 16.02.2000
(73) Titulaire: UNIVERSITE JOSEPH FOURIER, F-38041 Grenoble Cédex (FR)
(72) Inventeur: CHAMPLEBOUX, Guillaume, F-38500 Voiron (FR)
(74) Mandataire: de Beaumont, Michel
(86) Numéro de dépôt international: FR9800412
(87) Numéro de publication internationale: WO98040030

(56) Documents cités:
- WO-A-94/26200
- FR-A- 2 705 027
- US-A- 5 015 183
- US-A- 5 556 278

## Description

La présente invention concerne la pose d'implants dentaires destinés à assurer le maintien d'une prothèse.

Quand la dentition d'un patient est fortement dégradée, on peut envisager d'en remplacer les dents manquantes par des prothèses dentaires. Dans un mode de pose préféré, ces prothèses sont ancrées dans le maxillaire ou dans la mandibule par l'intermédiaire d'un ou plusieurs implants vissés dans la mâchoire concernée.

Une difficulté réside dans le fait que, quand la dentition d'un patient est fortement dégradée, il arrive également souvent que le système osseux de ses mâchoires soit aussi en mauvais état. Les emplacements où il est possible de poser les implants sont donc fortement limités et doivent être déterminés avec une grande précision.

Un processus classique de détermination de position des implants comprend la succession d'étapes suivantes.

### Étape I

Prise d'une empreinte de la mâchoire à implanter grâce à un matériau d'empreinte tel que du silicone, un alginate, un hydrocoloïde, etc., et coulée d'un modèle en plâtre à partir de cette empreinte.

### Étape II

Réalisation d'une gouttière en résine transparente dont le but est de porter une marque radio opaque qui indique en bouche l'endroit où l'on désire mettre l'implant dans l'os. Cette gouttière est élaborée à partir du modèle en plâtre. Elle est la reproduction en négatif de ce modèle sur lequel elle doit pouvoir s'encastrer intimement. Toutes les faces de la gouttière qui n'entrent pas en contact avec le modèle en plâtre ont une forme quelconque. A partir d'une analyse de la forme des dents et du système masticatoire du patient, le praticien détermine généralement a priori les endroits où il estime qu'il serait souhaitable d'ancrer la prothèse et de placer les implants.

### Étape III

Matérialisation des emplacements des implants par des cylindres ou cônes en un matériau visible aux rayons X tel que du gutta-percha, disposés dans la gouttière avec des orientations qui correspondent aux axes de perçages estimés. Il s'agit alors de déterminer si ces axes de perçage estimés, idéaux du point de vue prothétique, sont compatibles avec la structure osseuse de la mâchoire.

### Étape IV

Le patient met en bouche la gouttière et est soumis à un examen au scanner à rayons X. L'acquisition des coupes scanner se fait généralement dans le plan axial (c'est-à-dire parallèlement aux rebords inférieurs de la branche horizontale de la mandibule). On demande au radiologue de fournir des coupes passant approximativement par la position désirée de l'implant. Pour cela, le radiologue se sert de la marque radio opaque incluse dans la gouttière pour indiquer au logiciel du scanner l'endroit désiré pour l'implant. Le logiciel du scanner calcule alors une image passant cette marque et perpendiculaire au plan des coupes d'acquisition. A partir de cette image calculée, le praticien définit s'il peut mettre l'implant à cet endroit en respectant les divers éléments endo-osseux et selon quelle trajectoire approximative. S'il ne peut pas le mettre à cet endroit, il estime le déplacement vers une autre position par rapport à la marque incluse dans la gouttière. On se sert de toutes ces estimations pour reporter, sans paramètres chiffrés, l'implant en bouche.

### Étape V

On sort la gouttière de la bouche du patient puis, dans certaines réalisations, on réalise un perçage de la gouttière qui servira ensuite de guide pour le perçage de la mâchoire à l'emplacement où l'on souhaite insérer l'implant.

Un problème qui se pose dans la mise en oeuvre d'un tel processus est lié au transfert d'une information concernant l'axe optimal de perçage obtenue à partir des images scanner vers le guide de perçage constitué de la gouttière. Pour pouvoir tirer parti des informations issues du logiciel et des. images scanner, il est nécessaire de connaître la transformation rigide reliant le repère de l'imagerie scanner à un repère dans lequel a lieu le perçage de la gouttière. Il est également nécessaire de localiser cette gouttière dans le référentiel dans lequel a lieu son perçage.

On a déjà proposé de revêtir la face extérieure de la gouttière (étape II ci-dessus) d'un matériau partiellement radio-opaque pour rendre cette face visible sur les images scanner. Ainsi, on peut localiser la surface (en trois dimensions) de la gouttière dans le référentiel du scanner, c'est-à-dire acquérir un ensemble de points de la surface dans des images issues du scanner (étape IV ci-dessus). Une fois la gouttière sortie de la bouche du patient, elle est placée dans un milieu de détermination optique ou mécanique d'un capteur tridimensionnel. Ce capteur sert à localiser la surface de la gouttière dans le référentiel de perçage. La mise en correspondance des deux surfaces (surface de la gouttière acquise dans le référentiel du scanner et surface de la gouttière localisée par le capteur) permet de déterminer la transformation rigide (matrice de passage) entre les deux référentiels respectivement liés au scanner et au capteur. On peut ainsi transférer l'information concernant la position de l'axe de perçage de l'implant, ou les positions respectives des différents axes de perçage pour différents implants depuis les images scanner vers le référentiel mécanique du capteur dans lequel on positionne un robot de perçage.

Une telle solution, décrite dans la demande de brevet français N° 2 705 027, nécessite cependant l'utilisation d'un capteur optique ou mécanique pour obtenir ce transfert d'informations.

Le document WO-A-94/26200 décrit une gouttière adaptée à préparer la pose d'un implant dentaire dans laquelle deux tubes pénètrent en saillant vers l'extérieur de la bouche du patient.

Le document US-A-5 015 183 décrit un procédé de positionnement d'un implant dentaire dans la bouche d'un patient ainsi qu'un dispositif de localisation de l'implant.

La présente invention vise à proposer une nouvelle solution pour transférer une information concernant un axe de perçage obtenu dans le référentiel du scanner vers un référentiel associé au guide de perçage, c'est-à-dire à la gouttière.

La présente invention vise également à proposer une solution qui ne nécessite pas l'utilisation d'un capteur tridimensionnel optique ou mécanique.

Pour atteindre ces objets, la présente invention prévoit une gouttière adaptée à préparer la pose d'un implant dentaire, comportant, dans une protubérance d'un contour externe, au moins deux tubes creux, rectilignes et non concourants, débouchant de part et d'autre de la protubérance et localisables aux rayons X.

Selon un mode de réalisation de la présente invention, les axes respectifs des tubes s'inscrivent dans deux plans parallèles entre eux et perpendiculaires à un plan dans lequel s'inscrit la gouttière.

Selon un mode de réalisation de la présente invention, les axes des tubes font un angle compris entre 60 et 120° entre eux, de préférence, 90°.

La présente invention vise aussi un support mécanique d'une gouttière adaptée à préparer la pose d'un implant dentaire, définissant un logement ouvert de réception d'une protubérance d'une gouttière du type ci-dessus.

Selon un mode de réalisation de la présente invention, ce support comporte au moins deux platines espacées l'une de l'autre et saillantes d'une embase, les deux platines comportant, chacune, au moins deux orifices et chaque orifice étant propre à être en regard d'une extrémité d'un tube creux.

Selon un mode de réalisation de la présente invention, ce support est associé à au moins deux tiges propres à être engagées, chacune, depuis un orifice traversant d'une des platines, dans le tube avec lequel l'orifice est en regard et dans un orifice de l'autre platine.

La présente invention vise aussi un système de transfert d'une position simulée d'un implant dentaire entre un scanner à rayons X et un robot de perçage d'une gouttière de reproduction, en contre-forme, d'un moulage dentaire, comportant au moins un support mécanique ; et des moyens propres à lier, de façon amovible et dans une position reproductible, la gouttière au support, la gouttière contenant au moins deux éléments, rectilignes et non concourants, visibles aux rayons X.

Selon un mode de réalisation de la présente invention, les deux éléments rectilignes intégrés à la gouttière font partie des moyens de liaison de la gouttière au support.

Selon un mode de réalisation de la présente invention, le système est adapté à la mise en oeuvre d'un procédé de positionnement d'implants dentaires comprenant les étapes suivantes :
positionnement d'au moins deux éléments rectilignes, non concourants et visibles aux rayons X, dans un logement ouvert d'un premier support mécanique ;
réalisation d'une gouttière, à partir d'un moulage dentaire et du support mécanique, pour intégrer lesdits éléments dans la gouttière ;
mise en bouche de la gouttière, retirée du support, et réalisation de coupes tomographiques au scanner de cette gouttière et de la mâchoire correspondante ;
détermination par un logiciel de simulation de la position optimale d'au moins un implant à réaliser ;
détermination, dans un référentiel associé aux éléments rectilignes, des axes de perçage idéaux déterminés par l'analyse des images scanner ;
positionnement de la gouttière dans un deuxième support, identique au premier et lié à un système de robotique ;
perçage, par le robot, de la gouttière selon lesdits axes ; et
remise en bouche de la gouttière et utilisation de cette gouttière comme guide de perçage de la mâchoire pour la pose d'implants.

Selon un mode de réalisation de la présente invention, les premier et deuxième supports sont un même support équipé de moyens de fixation amovibles au robot de perçage.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, schématiquement et en perspective, un mode de réalisation d'une gouttière pour préparer la pose d'un implant dentaire selon la présente invention ;
la figure 2 représente un mode de réalisation d'un support mécanique pour gouttière selon la présente invention ;
la figure 3 représente un mode de réalisation d'un organe de réception de moyens de liaison amovibles d'une gouttière à un support mécanique selon la présente invention ;
la figure 4 représente un mode de réalisation d'un organe de liaison amovible d'une gouttière à un support mécanique selon la présente invention ;
la figure 5 illustre les positions respectives d'un support mécanique et de moyens de liaison, en vue d'une intégration des organes de réception dans une gouttière selon la présente invention ; et
la figure 6 représente une gouttière selon l'invention, associée à un support mécanique et en position sur un moulage dentaire.

Pour des raisons de clarté, les mêmes éléments ont été désignés par les mêmes références aux différentes figures.

Une caractéristique de l'invention est d'associer une gouttière, adaptée à la mise en oeuvre d'un procédé de positionnement d'implant dentaire, à un support mécanique amovible, et de prévoir des liaisons amovibles qui préservent les positions respectives de la gouttière et du support mécanique lorsqu'ils sont associés.

Une autre caractéristique de la présente invention est qu'une partie des moyens de liaison est intégrée à la gouttière et est localisable par un scanner à rayons X ou tout autre système de localisation en trois dimensions, par exemple, un système d'images par résonance magnétique.

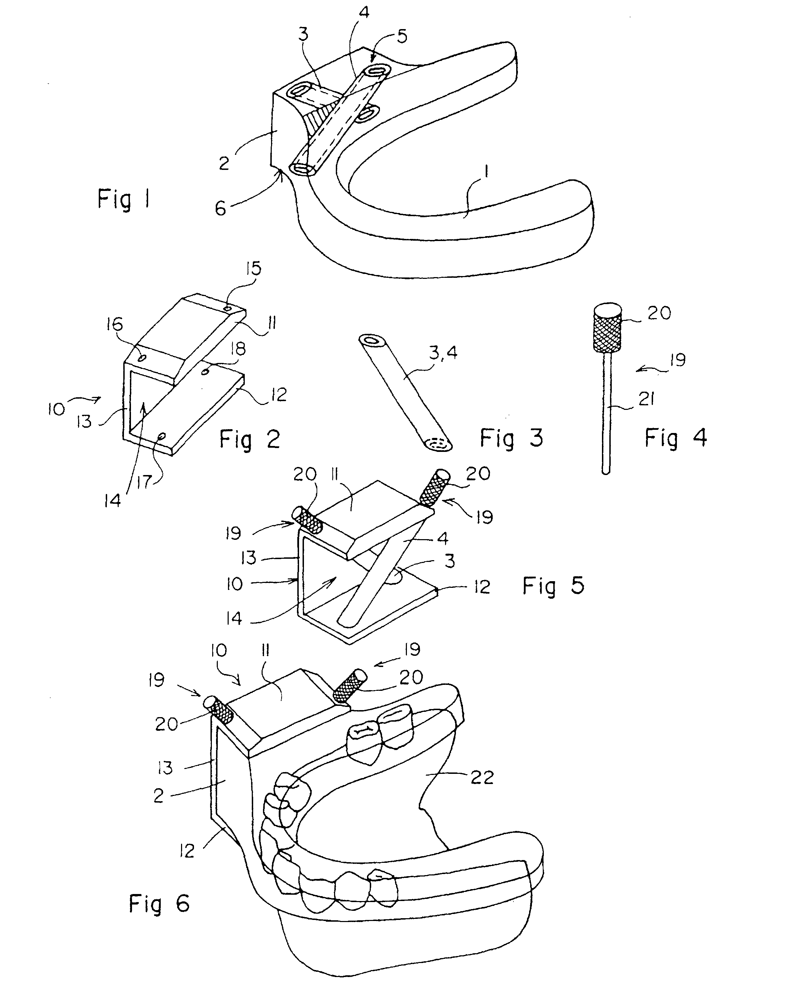

La figure 1 représente, schématiquement et en perspective, un mode de réalisation d'une gouttière 1 selon la présente invention. Cette gouttière est réalisée de façon classique à partir d'un moulage dentaire (non représenté à la figure 1), coulé dans une empreinte d'une mâchoire à implanter d'un patient. Selon la présente invention, la gouttière 1 présente une protubérance 2 vers l'extérieur de la forme du moulage. Cette protubérance 2 intègre deux tubes 3, 4, creux et rectilignes, dont les axes respectifs sont, par exemple, contenus dans deux plans parallèles entre eux et perpendiculaires à un plan dans lequel s'inscrit la gouttière 1. Les tubes 3 et 4 sont intégrés à la protubérance 2 lors de la fabrication de la gouttière 1, comme on le verra par la suite.

Une caractéristique des tubes 3 et 4 est qu'ils sont en un matériau visible aux rayons X pour être localisables par un scanner. Les axes des tubes 3 et 4 ne sont pas parallèles entre eux et font, par exemple, un angle compris entre 60 et 120°, de préférence 90°. Les tubes 3 et 4 débouchent de part et d'autre de surfaces 5, 6 sensiblement planes de la protubérance 2. Les surfaces 5 et 6 sont, de préférence, parallèles au plan dans lequel s'inscrit la gouttière 1.

Le rôle des tubes 3 et 4 est double. D'une part, ils définissent deux droites non concourantes dans des images reconstituées à partir de coupes tomographiques prises au scanner. D'autre part, ils constituent des organes de réception de moyens de liaison amovibles de la gouttière 1 à un support mécanique.

La figure 2 représente un mode de réalisation d'un support mécanique amovible selon la présente invention.

Selon ce mode de réalisation, le support 10 a la forme générale d'un étrier rigide, constitué de deux plaques 11, 12 saillantes d'une embase 13. Les plaques 11 et 12 sont écartées l'une de l'autre et définissent, avec l'embase 13, un logement 14 de réception de la protubérance 2 d'une gouttière 1 telle que représentée à la figure 1.

Bien que cela ne soit pas indispensable, les plaques 11 et 12 sont, de préférence, parallèles entre elles et perpendiculaires à l'embase 13.

Chaque plaque 11, 12 comporte, selon le mode de réalisation représenté, deux orifices, respectivement 15, 16 et 17, 18. Ces orifices sont alignés deux à deux selon l'axe d'un tube 3, 4 (figure 3) pour être, chacun, en regard d'une extrémité d'un tube 3, 4 lorsque des tubes sont placés entre les plaques 11 et 12.

Les tubes 3 et 4 sont destinés à être liés au support 10, de manière amovible, au moyen de tiges rigides 19 (figure 4) propres à être engagées dans les orifices du support 10 et dans les tubes 3 et 4. Au moins deux orifices, par exemple les orifices 15, 16 de la platine 11, sont traversants pour permettre l'introduction des tiges 19. Les orifices 17, 18 de l'autre plaque 12 ne sont pas nécessairement traversants mais peuvent être des trous borgnes ouverts en direction de la plaque 11.

Les tiges 19 ont une longueur supérieure à celle des tubes 3, 4 majorée de l'épaisseur de la plaque 11 et de la profondeur des orifices 17, 18 de la plaque 12, afin de permettre leur préhension lorsqu'elles sont en position engagée. Une portion 20 de préhension des tiges 19 a, par exemple, un diamètre supérieur au diamètre d'une portion 21 de liaison, pour constituer, à la fois un moyen de préhension de ces tiges et une butée à l'enfoncement des portions 21 si les quatre orifices du support 10 sont traversants.

Le diamètre intérieur des tubes 3 et 4 est sensiblement égal au diamètre extérieur des portions 21 des tiges 19 aux tolérances mécaniques près afin d'éviter un jeu entre le support 10 et la gouttière 1 lorsque ces deux éléments sont associés.

La figure 5 illustre l'association du support 10 représenté à la figure 2 avec deux tubes 3 et 4 maintenus entre les plaques 11 et 12 au moyen de deux tiges 19.

On notera que les tubes 3 et 4 ne sont pas nécessairement contenus dans deux plans parallèles, pourvu que leurs axes respectifs ne soient pas concourants. Toutefois, un mode de réalisation tel que représenté aux figures constitue une disposition préférée des tubes 3 et 4 dans la mesure où elle minimise l'encombrement de la protubérance 2 en périphérie de la gouttière 1 qui doit, par ailleurs, être adaptée à être mise dans la bouche d'un patient.

On décrira par la suite un mode de mise en oeuvre de la présente invention pour préparer la pose d'un implant dentaire.

La présente invention reprend les étapes I et II du procédé antérieur cité ci-dessus. Toutefois, à l'étape II, la gouttière est élaborée à partir du modèle en plâtre de la dentition du patient et d'un support 10 selon l'invention, associé à deux tubes 3 et 4 liés au moyen de tiges 19, c'est-à-dire a une structure telle que représentée à la figure 5.

La figure 6 illustre la réalisation d'une gouttière 1 selon l'invention. Un matériau durcissable, par exemple, une résine, est coulée, non seulement sur le moulage dentaire 22 en plâtre reproduisant les dents du patient, mais également dans le logement 14 (figure 5) défini par le support 10, afin de constituer la protubérance 2 dans laquelle sont intégrés les tubes 3 et 4.

Ainsi, la forme de la protubérance 2 est parfaitement adaptée à la forme du logement 14 du support 10.

On notera que, selon l'invention, le matériau constitutif de la gouttière peut-être quelconque pourvu qu'il permette une localisation, par un scanner, des tubes 3, 4 présents dans la protubérance 2.

Une fois la résine durcie, on ôte les tiges 19 pour désolidariser le support 10 de la protubérance 2 de la gouttière 1 et on obtient une gouttière telle que représentée à la figure 1.

On procède alors à un examen au scanner à rayons X de la gouttière mise dans la bouche du patient. Cet examen permet de reconstruire, sur les images issues des coupes tomographiques prises au scanner, deux droites correspondant aux axes des tubes 3 et 4, desquelles on déduit un repère tridimensionnel.

Le praticien détermine alors, à l'aide des images scanner, l'axe idéal de perçage pour la pose d'un implant dentaire. Cet axe de perçage est déterminé dans le repère du scanner, donc également dans le référentiel associé aux tubes 3 et 4.

Un avantage de la présente invention est que, grâce aux deux tubes 3, 4 qui lui sont intégrés, la gouttière 1 est repositionnable dans le support 10, en respectant sa position d'origine à l'aide des deux tiges 19. L'emploi de deux tiges empêche tout mouvement de la gouttière par rapport au support. Ainsi, la gouttière 1 peut être liée, par l'intermédiaire du support 10, à un robot de perçage dont le référentiel peut être le même que celui associé aux tubes 3, 4. En effet, la position des tubes 3, 4 est invariante par rapport au support 10 quand la gouttière est associée au support. Le robot peut donc être actionné de telle manière que son axe de perçage coïncide exactement avec la position de l'axe défini par l'analyse des images issues du scanner et le perçage est effectué dans la gouttière 1 exactement à l'emplacement et selon la direction souhaitée. Cette opération est bien sûr répétée si plusieurs implants sont prévus.

Il restera alors au chirurgien dentiste à remettre la gouttière en place dans la bouche du patient et à effectuer un perçage de la mâchoire en guidant son foret sur le trou formé dans la gouttière 1.

A titre de variante, une troisième plaque (non représentée) peut fermer un côté du logement 14, afin de faciliter le repositionnement ultérieur de la gouttière 1 dans le support 10. Le logement 14 reste alors ouvert dans deux directions non parallèles pour permettre l'extraction et l'introduction du prolongement 2 de la gouttière 1.

On notera que le support associé au robot de perçage n'est pas nécessairement le même que le support ayant servi à la réalisation de la gouttière 1. En effet, on peut, selon l'invention, prévoir d'utiliser plusieurs supports identiques, c'est-à-dire dans lesquels les positions des plaques 11, 12 l'une par rapport à l'autre et dans lesquels les positions des orifices 15, 16, 17, 18 sont identiques, pour qu'une même gouttière puisse être associée à différents supports. Cela permet, en particulier, qu'un support soit fixé à demeure au robot de perçage. De même, cela permet d'utiliser un outillage de moulage d'une gouttière, équipé d'un support 10 inamovible.

On notera également que les seuls constituants à usage unique sont les tubes 3, 4 devant être intégrés à la gouttière 1, le support 10 et les tiges 19 étant réutilisables.

Ainsi, un aspect essentiel de la présente invention réside dans l'association d'éléments, rectilignes et localisables par un scanner, à un support mécanique amovible permettant de préserver, sans avoir recours à d'autres mesures, un même repère, dans le référentiel du scanner et dans un référentiel mécanique.

Bien entendu, la présente invention est susceptible de diverses variantes et modifications qui apparaîtront à l'homme de l'art. En particulier, différents matériaux (métal, céramique) pourront être choisis pour réaliser le support 10 et les tiges 19, ces matériaux devant être aussi résistants à l'usure que possible. En effet, l'introduction des tiges 19 dans les orifices du support est une source d'usure qu'il faut éviter. Ainsi, par exemple, on préférera une céramique ou de l'acier inoxydable à de l'aluminium. Les tubes 3, 4 seront choisis en un matériau qui ne produise pas d'artefacts lors du passage au scanner, dont la trace au scanner soit suffisamment contrastée par rapport aux tissus et aux os et qui présente une résistance mécanique suffisante. On choisira par exemple du titane ou de l'aluminium. De plus, bien que deux tubes suffisent avantageusement pour la mise en oeuvre de l'invention, on pourra prévoir d'associer plus de deux tubes à un support adapté à cet effet. En outre, d'autres systèmes de localisation en trois dimensions qu'un scanner à rayons X pourront être utilisés.

## Revendications

1. Gouttière (1) adaptée à préparer la pose d'un implant dentaire, **caractérisée en ce qu'**elle comporte, dans une protubérance (2) latérale d'un contour externe, au moins deux tubes (3, 4) creux, rectilignes et non concourants, débouchant uniquement de part et d'autre de la protubérance et localisables aux rayons X.

2. Gouttière selon la revendication 1, **caractérisée en ce que** les axes respectifs des tubes (3, 4) s'inscrivent dans deux plans parallèles entre eux et perpendiculaires à un plan dans lequel s'inscrit la gouttière (1).

3. Gouttière selon la revendication 1 ou 2, **caractérisée en ce que** les axes des tubes (3, 4) font un angle compris entre 60 et 120° entre eux, de préférence, 90°.

4. Support mécanique (10) d'une gouttière (1) adaptée à préparer la pose d'un implant dentaire, **caractérisé en ce qu'**il définit un logement ouvert (14) de réception d'une protubérance (2) d'une gouttière selon l'une quelconque des revendications 1 à 3, et **en ce qu'**il est pourvu d'orifices (15, 16 ; 17, 18) propres à être chacun en regard d'une extrémité d'un des tubes creux (3, 4) de la gouttière.

5. Support selon la revendication 4, **caractérisé en ce qu'**il comporte au moins deux platines (11, 12) espacées l'une de l'autre et saillantes d'une embase (13), les deux platines comportant, chacune, au moins deux desdits orifices (15, 16 ; 17, 18).

6. Support selon la revendication 5, **caractérisé en ce qu'**il est associé à au moins deux tiges (19) propres à être engagées, chacune, depuis un orifice (15, 16) traversant d'une des platines (11), dans le tube (3, 4) avec lequel l'orifice est en regard et dans un orif ice (17, 18) de l'autre platine (12).

7. Système de transfert d'une position simulée d'un implant dentaire entre un scanner à rayons X et un robot de perçage d'une gouttière (1) de reproduction, en contre-forme, d'un moulage dentaire (22), **caractérisé en ce qu'**il comporte :
au moins un support mécanique (10) conforme à l'une quelconque des revendications 4 à 6 ; et
des moyens (3, 4, 19) propres à lier, de façon amovible et dans une position reproductible, la gouttière (1) au support (10), la gouttière étant conforme à l'une quelconque des revendications 1 à 3.

8. Système selon la revendication 7, **caractérisé en ce que** les deux éléments rectilignes (3, 4) intégrés à la gouttière
(1) font partie des moyens de liaison de la gouttière au support.

9. Procédé de positionnement d'implants dentaires au moyen d'un système selon la revendication 7 ou 8, **caractérisé en ce qu'**il comprend les étapes suivantes :
positionnement d'au moins deux éléments rectilignes (3, 4), non concourants et visibles aux rayons X, dans un logement ouvert (14) d'un premier support mécanique (10) ;
réalisation d'une gouttière (1), à partir d'un moulage dentaire (22) et du support mécanique (10), pour intégrer lesdits éléments (3, 4) dans la gouttière (1) ;
mise en bouche de la gouttière (1), retirée du support (10), et réalisation de coupes tomographiques au scanner de cette gouttière et de la mâchoire correspondante ;
détermination par un logiciel de simulation de la position optimale d'au moins un implant à réaliser ;
détermination, dans un référentiel associé aux éléments rectilignes (3, 4), des axes de perçage idéaux déterminés par l'analyse des images scanner ;
positionnement de la gouttière (1) dans un deuxième support (10), identique au premier, et lié à un système de robotique ;
perçage, par le robot, de la gouttière (1) selon lesdits axes ; et
remise en bouche de la gouttière (1) et utilisation de cette gouttière comme guide de perçage de la mâchoire pour la pose d'implants.

10. Système selon la revendication 7 ou 8, pour la mise en oeuvre du procédé selon la revendication 9, **caractérisé en ce que** lesdits premier et deuxième supports sont un même support (10) équipé de moyens de fixation amovibles au robot de perçage.

## Patentansprüche

1. Schiene (1) zum Vorbereiten des Einsetzens eines Zahnimplantates, **dadurch gekennzeichnet, dass** sie in einem seitlichen Vorsprung (2) an der Außenkontur zumindest zwei hohle, geradlinige und nicht durch einen Punkt laufende Rohre (3, 4) aufweist, die lediglich an beiden Seiten des Vorsprunges Öffnungen aufweisen und mit Röntgenstrahlen lokalisierbar sind.

2. Schiene nach Anspruch 1, **dadurch gekennzeichnet, dass** die entsprechenden Achsen der Rohre (3, 4) in zwei zueinander parallelen Ebenen liegen, die senkrecht zu einer Ebene sind, in der die Schiene (1) liegt.

3. Schiene nach Anspruch 1 oder 2, **dadurch gekennzeichnet, dass** die Achsen der Rohre (3, 4) untereinander einen Winkel zwischen 60° und 120°, vorzugsweise 90° bilden.

4. Mechanischer Träger (10) für eine Schiene (1) zum Vorbereiten des Einsetzens eines Zahnimplantates, **dadurch gekennzeichnet, dass** er ein offenes Abteil (14) zur Aufnahme eines Vorsprunges (2) einer Schiene nach einem der Ansprüche 1 bis 3 begrenzt, und dass er mit Öffnungen (15, 16; 17, 18) versehen ist, die so gelegen sind, dass jede einem äußeren Ende eines der hohlen Rohre (3, 4) der Schiene gegenüberliegt.

5. Träger nach Anspruch 4, **dadurch gekennzeichnet, dass** er zumindest zwei Platten (11, 12) aufweist, die voneinander entfernt gelegen sind und von einer Basis (13) ausgehen, wobei jede der beiden Platten zumindest zwei der besagten Öffnungen (15, 16; 17, 18) aufweist.

6. Träger nach Anspruch 5, **dadurch gekennzeichnet, dass** er mit zumindest zwei Stiften (19) verbunden ist, von denen jeder von einer die eine der Platten (11) durchquerenden Öffnung (15, 16) in das Rohr (3, 4), das der Öffnung gegenüberliegt, und in eine Öffnung (17, 18) der anderen Platte (12) gesteckt werden kann.

7. System zum Übertragen einer simulierten Position eines Zahnimplantates zwischen einem Röntgenstrahl-Scanner und einem Bohrrobot für eine Reproduktionsschiene (1), die eine Gegenform eines Zahnabdruckes (22) ist, **dadurch gekennzeichnet, dass** es aufweist:
- zumindest einen mechanischen Träger (10) entsprechend einem der Ansprüche 4 bis 6; und
- Einrichtungen (3, 4, 19) zum lösbaren Verbinden der Schiene (1) mit dem Träger (10) in einer reproduzierbaren Position, wobei die Schiene entsprechend einem der Ansprüche 1 bis 3 ausgebildet ist.

8. System nach Anspruch 7, **dadurch gekennzeichnet, dass** die beiden geradlinigen, in die Schiene (1) integrierten Elemente (3, 4) Teil der Einrichtungen zum Verbinden der Schiene mit dem Träger sind.

9. Verfahren zum Positionieren von Zahnimplantaten mit Hilfe eines Systems nach Anspruch 7 oder 8, **dadurch gekennzeichnet, dass** es die folgenden Schritte aufweist:
- Positionieren von zumindest zwei geradlinigen Elementen (3, 4), die nicht durch einen gemeinsamen Punkt gehen und mit Röntgenstrahlen sichtbar sind, in einem offenen Abteil (14) eines ersten mechanischen Trägers (10);
- Realisieren einer Schiene (1) auf der Grundlage eines Zahnabdruckes (22) und des mechanischen Trägers (10), um die Elemente (3, 4) in der Schiene (1) zu integrieren;
- Einsetzen der Schiene (1) mit abgezogenem Träger (10) in den Mund und Realisieren von tomographischen Schnitten der Schiene und des korrespondierenden Kiefers mit dem Scanner;
- Bestimmen mit einer Simulationssoftware der optimalen Position zumindest eines zu verwirklichenden Implantates;
- Bestimmen der idealen Bohrachsen, die durch die Analyse der Scannerbilder bestimmt wurden, in einem den geradlinigen Elementen (3, 4) zugeordneten Referenzsystem;
- Positionieren der Schiene (1) in einem zweiten, mit dem ersten identischen und mit einem Robotsystem verbundenen Träger (10);
- Bohren der Schiene (1) längs der genannten Achsen durch den Robot; und
- Wiedereinsetzen der Schiene (1) in den Mund und Verwenden dieser Schiene als Führung zum Bohren des Kiefers zum Einsetzen der Implantate.

10. System nach Anspruch 7 oder 8 für die Durchführung des Verfahrens nach Anspruch 9, **dadurch gekennzeichnet, dass** der erste und zweite Träger der gleiche Träger (10) ist, der mit lösbaren Befestigungseinrichtungen für den Bohrrobot ausgerüstet ist.

## Claims

1. A cradle (1) adapted to preparing the placing of a dental implant **characterized in that** it includes, in a lateral protrusion (2) of an external contour, at least two hollow rectilinear non-concurrent tubes (3, 4) emerging only on either side of the protrusion and locatable by X-rays.

2. The cradle of claim 1, **characterized in that** the respective axes of the tubes (3, 4) inscribe in two parallel planes, perpendicular to a plane in which the cradle (1) inscribes.

3. The cradle of claim 1 or 2, **characterized in that** the axes of the tubes (3, 4) form an angle included between 60 and 120°, preferably 90°.

4. A mechanical support (10) of a cradle (1) adapted to preparing the placing of a dental implant, **characterized in that** it defines an open housing (14) for receiving a protrusion (2) of the cradle of claims 1 to 3, and it is provided with openings (15, 16; 17, 18), each of which is adapted to facing an end of one of the hollow tubes (3, 4) of the cradle.

5. The support of claim 4, **characterized in that** it includes at least two spaced apart plates (11, 12) protruding from a base (13), each plate including at least two of said openings (15, 16; 17, 18).

6. The support of claim 5, **characterized in that** it is associated with at least two rods (19), each being adapted to being engaged from a through hole (15, 16) of one of the plates (11) into the tube (3, 4) facing the opening and into an opening (17, 18) of the other plate (12).

7. A system for transferring a simulated position of a dental implant from an X-ray scanner to a robot for drilling a cradle (1) of reproduction in complementary shape of a dental casting (22), **characterized in that** it includes:
at least one mechanical support (10) according to claims 4 to 6; and
means (3, 4, 19) adapted to removably connecting in a reproducible position the cradle (1) to the support (10), the cradle being in conformity with claims 1 to 3.

8. The system of claim 7, **characterized in that** the two rectilinear elements (3, 4) integrated to the cradle (1) are part of the means of connection of the cradle to the support.

9. A method of dental implant positioning by means of the system of claim 7 or 8, **characterized in that** it includes the steps of:
positioning at least two rectilinear non-concurrent elements (3, 4) visible with X-rays in an open housing (14) of a first mechanical support (10);
forming a cradle (1) based on a dental casting (22) and on the mechanical support (10), to integrate said elements (3, 4) in the cradle (1);
placing the cradle (1), removed from the support (10), in the mouth, and performing scanner tomographic cross-sections of this cradle and of the corresponding jaw;
determining with a simulation software the optimal position of at least one implant to be performed;
determining, in a referential associated with the rectilinear elements (3, 4), ideal drilling axes determined by the analysis of the scanner images;
positioning the cradle (1) in a second support (10), identical to the first one and linked to a robot system;
drilling, with the robot, the cradle (1) along said axes; and
placing the cradle (1) back into the mouth and using this cradle as a jaw drilling guide for the placing of implants.

10. A system according to claim 7 or 8 for implementing the method of claim 9, **characterized in that** the first and second supports are a same support (10) equipped with removable means of attachment to the drilling robot.
